(19) **Europäisches Patentamt**

**European Patent Office**

**Office européen des brevets**

(11) **EP 1 653 743 A1**

(12) **EUROPEAN PATENT APPLICATION**
published in accordance with Art. 158(3) EPC

(43) Date of publication:
**03.05.2006 Bulletin 2006/18**

(51) Int Cl.:
*H04N 7/18* (1968.09)    *H04N 5/225* (1985.01)
*H04N 5/91* (1980.01)    *G06T 1/00* (1995.01)

(21) Application number: **04702068.0**

(22) Date of filing: **14.01.2004**

(86) International application number:
**PCT/JP2004/000177**

(87) International publication number:
**WO 2004/066631 (05.08.2004 Gazette 2004/32)**

(84) Designated Contracting States:
**DE FR GB**

(30) Priority: **20.01.2003 JP 2003011614**

(71) Applicant: **SONY CORPORATION**
**Tokyo 141 (JP)**

(72) Inventors:
• **FUJITA, Hironori,**
**SONY CORPORATION**
**shinagawa-ku, Tokyo 1410001 (JP)**

• **MASE, Mikiko,**
**SONY EMCS CORPORATION**
**Shinagawa-ku, Tokyo 1410022 (JP)**
• **HAMA, Hideki,**
**SONY CORPORATION**
**shinagawa-ku, Tokyo 1410001 (JP)**
• **HASEGAWA, Hiroyuki,**
**SONY CORPORATION**
**shinagawa-ku, Tokyo 1410001 (JP)**

(74) Representative: **Mills, Julia**
**D Young & Co**
**120 Holborn**
**London EC1N 2DY (GB)**

(54) **MONITORING DEVICE AND MONITORING METHOD USING PANORAMA IMAGE**

(57)    The present invention is directed to a monitoring apparatus adapted for monitoring panoramic image obtained by picking up images of photographic range while successively changing photographic direction, and serves to successively record, at a server (53), every unit image, panoramic images obtained by picking up images of photographic range while successively changing photographic direction to compare luminance levels for each original color component between one unit image selected from the server and unit image on the same photographic direction which is recorded prior to the unit image to display, through a display (6), on the basis of the comparison result thereof, a predetermined information every unit images constituting the panoramic image to thereby pay attention to user.

FIG.2

## Description

Technical Field

The present invention relates to a monitoring apparatus and a monitoring method which are adapted for monitoring circumstances of the broad range by using panoramic image obtained by picking up images while successively changing photographic directions.

This Application claims priority of Japanese Patent Application No. 2003-011614, filed on January 20, 2003, the entirety of which is incorporated by reference herein.

Background Art

Hitherto, electronic still cameras widely used have a function to convert object image picked up by solid-state image pick-up device such as CCD, etc. through lens into an image signal as an electric signal to record the image signal onto a recording medium to reproduce the recorded image signal. Moreover, most of electronic still cameras comprise a monitor capable of displaying picked up still picture (image), thus making it possible to select a specific one of still pictures (images) which have been recorded until now to display the selected still picture (image). In such electronic still cameras, since image signals delivered to the monitor correspond to objects every pictures (frames), images which are displayed at the same time result in images within a narrow range. For this reason, circumstances of the broad range could not be monitored. In order to solve such a problem, there is proposed a monitoring method of photographing object while successively shifting photographic directions of the camera to synthesize these object images to obtain panoramic image to thereby have ability to monitor circumstances of the broad range.

Particularly, in recent years, a technology of performing contraction/synthesis of plural video signals so that video signal of one frame is provided is proposed in the Japanese Patent Application Laid Open No. 1998-108163 publication, and a concentrated monitoring recording system of collecting monitor images from installed (provided) plural monitoring video cameras to record them onto recording medium such as video tape, etc. to permit execution of monitoring is also proposed in the Japanese Patent Application Laid Open No. 2000-243062 publication.

In the case where any change in the photographic range is detected by making use of images recorded on such recording medium, watchman (observer) had to observe, in every nook and corner, circumstances (states) of monitoring images inputted momentarily every each scan. Particularly, the watchman had to always discriminate change of fine image and/or appearance of very small objects so that excessive labor and/or time are required. Further, because the system depends upon the eye of such watchman, there was the possibility that overlooking of such state change might take place.

In addition, there was also the problem that in the case where change in the photographic range is detected, it is required to trace back to image data which are recorded in the past to refer such image data to analyze detailed circumstances (states) or causes so that burden of labor of watchman is further increased.

Disclosure of the Invention

An object of the present invention is to provide a novel monitoring apparatus and a novel monitoring method, a program for operating an image pick-up apparatus and a monitoring apparatus, and a monitoring system which can solve problems that conventional technologies as described above have.

Another object of the present invention is to provide a monitoring apparatus and a monitoring method, a program for operating an image pick up apparatus and a monitoring apparatus, and a monitoring system which can lessen burden of labor of watchman and can rapidly and precisely detect circumstances (states) from broad photographic range.

The monitoring apparatus according to the present invention is adapted to successively record, onto a recording medium, every unit image, panoramic images obtained by picking up images of photographic ranges while successively changing photographic directions thereafter to compare luminance levels for each original color component between one unit image selected from the recording medium and unit image on the same photographic direction which is recorded prior to the unit image to display, on the basis of the comparison result thereof, a predetermined information every unit images constituting the panoramic images to thereby call attention to user.

In concrete terms, the present invention is directed to a monitoring apparatus adapted for monitoring panoramic images obtained by picking up images of photographic ranges while successively changing photographic directions, wherein there are provided recording means for successively recording, onto a recording medium, respective unit images constituting the panoramic image, comparison means for comparing luminance levels for each original color component between one unit image selected from the recording medium and unit image on the same photographic direction which is recorded prior to the unit image, and display means for displaying, on the basis of comparison result by the comparison means, a predetermined information every unit images constituting the panoramic image.

The monitoring method according to the present invention is directed to a monitoring method of monitoring panoramic images obtained by picking up images of photographic ranges while successively changing photographic directions, the monitoring method comprising: successively recording, onto a recording medium, respective unit images constituting the panoramic image; comparing luminance levels for each original color component between one unit image selected from the recording medium and unit image on the same photographic direction which is recorded prior to the selected unit image; and displaying a predetermined information every unit images constituting panoramic image on the basis of the comparison result.

The image pick-up apparatus according to the present invention comprises: image pick-up means for picking up images of photographic range while successively changing photographic directions to thereby generate an image signal of panoramic image; recording means for successively recording, onto a recording medium, respective unit images constituting the panoramic image on the basis of the generated image signal; comparison means for comparing luminance levels for each original color component between one unit image selected from the recording medium and unit image on the same photographic direction which is recorded prior to the selected unit image; and display means for displaying a predetermined information every unit images constituting the panoramic image on the basis of the comparison result by the comparison means.

The program which can be read by computer according to the present invention is directed to a program for monitoring panoramic image obtained by picking up images of photographic range while successively changing photographic directions, the program comprising: successively recording, onto a recording medium, respective unit images constituting the panoramic image; comparing luminance levels for each original color component between one unit image selected from the recording medium and unit image on the same photographic direction which is recorded prior to the selected unit image; and displaying a predetermined information every unit images constituting the panoramic image on the basis of the comparison result.

The monitoring system according to the present invention comprises: an image pick-up unit for picking up images of photographic range while successively changing photographic directions to thereby generate an image signal of panoramic image; a server for successively recording respective unit images constituting the panoramic image on the basis of the generated image signal; server control means for comparing luminance levels for each original color component between one unit image selected from the server and unit image on the same photographic direction which is recorded prior to the selected unit image; and terminal units adapted so that comparison result by the server control means is transmitted through a communication network to display a predetermined information every unit images constituting the panoramic image on the basis of the comparison result.

Still further objects of the present invention and practical merits obtained by the present invention will become more apparent from the description of embodiments which will be given below with reference to the attached drawings.

Brief Description of the Drawings

FIG. 1 is a view showing the configuration of a monitoring system to which the present invention has been applied.
FIG. 2 is a block diagram of camera unit and monitoring unit.
FIG. 3 is a view for explaining the case where image of the inside of photographic range indicated by black frame is picked up at image pick-up angle u by the camera unit.
FIG. 4 is a view showing configuration example of display picture on display.
FIG. 5 is a view for explaining a method of detecting difference produced on picked-up image.
FIGS. 6A to 6C are views for explaining a method of setting color level and difference detection level for each original color component.
FIGS. 7A and 7B are views for explaining the case where size of object in which difference can be detected is selected.
FIG. 8 is a view showing an example of size comparison between detected area and reference image area.
FIG. 9 is a view for explaining setting of reference block and search block.
FIGS. 10A and 10B are views for explaining a method of determining similarity.
FIGS. 11A and 11B are views for explaining a method of calculating variance integral value.
FIG. 12 is a flowchart showing various setting procedures by user with respect to unit image displayed at entire image display unit.
FIG. 13 is a flowchart showing procedure of difference detection with respect to respective unit images.
FIG. 14 is a flowchart showing procedure for offering information relating to detected difference to user who operates terminal unit.

Best mode for Carrying Out the Invention

Embodiments of the present invention will now be described in detail with reference to the attached drawings.

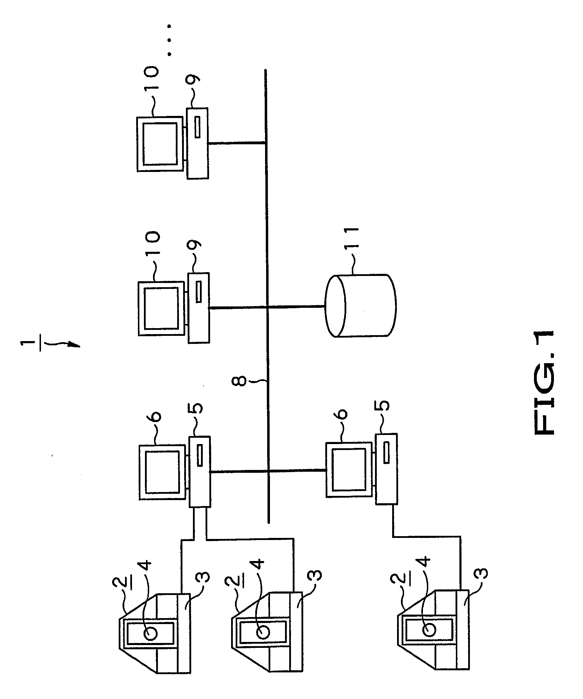

The monitoring system 1 to which the present invention has been applied comprises, as shown in FIG. 1, camera units 2 for picking up image of object to generate an image signal, monitoring units 5 to which the image signal generated by the camera unit 2 is transmitted, displays 6 connected to the monitoring units 5, terminal units 9 for allowing plural users to execute application, a network 8 for performing transmission/reception of information between the monitoring units 5 and the respective terminal units 9, terminal displays 10 respectively connected to the terminal units 9, and a network server 11 connected to the network 8.

At the camera unit 2, a pan/tilter section 3 and a camera section 4 are integrally constituted. The pan/tilter section 3 is constituted as a rotary table for freely changing photographic direction, e.g., with respect to two axes of pan and tilt.

The camera section 4 is disposed on the rotary table constituting the pan/tilter section 3, and serves to pick up image of object while adjusting photographic direction in horizontal direction or in vertical direction in accordance with control by the monitoring unit 5. The camera section 4 successively changes photographic picture angle in accordance with control by the monitoring unit 5 to thereby enlarge or contract photographic enlargement ratio to pick up image of object. Plural camera sections 4 are installed (provided) with respect to one monitoring unit 5 to thereby have ability to perform image pick-up operation at photographic angles different from each other with respect to the same object.

The monitoring unit 5 is constituted by information processing unit, e.g., personal computer (PC), etc., and serves to record image signals transmitted from the camera unit 2 to display, for user, recorded image signal through the display 6. In the case where a desired image area or image position is designated from user, the monitoring unit 5 conducts a control so as to select optimum one from recorded image signals to display the selected image signal. The monitoring unit 5 also has a role as the so-called central control unit for controlling the entirety of the network 8 to transmit image in accordance with request from other terminal unit 9.

The network 8 is public communication network capable of performing bi-directional transmission/reception of information, which includes, e.g., Internet connected to the monitoring unit 5 through telephone line, such as ISDN (Integrated Services Digital Network)/B(broadband)-ISDN connected to TA/modem, etc. It is to be noted that in the case where the monitoring system 1 is operated within a predetermined narrow area, the network 8 may be constituted by LAN (Local Area Network). The network 8 may also transmit MPEG image in addition to still image. In such case, MPEG data are continuously transmitted from a certain one terminal on the basis of Internet Protocol (IP), and still image data are transmitted every predetermined time from different channel.

The terminal units 9 are PCs for allowing users standing ready at respective homes or enterprises, etc. to acquire images from the monitoring units 5 through the network 8 to execute desired processing. By connecting plural terminal units 9 to the network 8, it becomes possible to simultaneously offer application of the monitoring system 1 to plural users. The terminal units 9 display image acquired from the monitoring units 5 with respect to terminal displays 10. In addition, the terminal unit 9 generates a request signal in accordance with designated operation by user to transmit the request signal to the monitoring unit 5. It should be noted that the configuration of monitoring unit 5 which will be desired later is quoted with respect to the block configuration of the terminal unit 9, and its explanation will be omitted.

The network server 11 performs management of, e.g., Internet information to receive request by the terminal unit 9 to store the request thereinto to transmit a predetermined information therefrom.

Then, the configurations of the camera unit 2, and the monitoring unit 5 which constitute the monitoring system 1 to which the present invention has been applied will be described in detail.

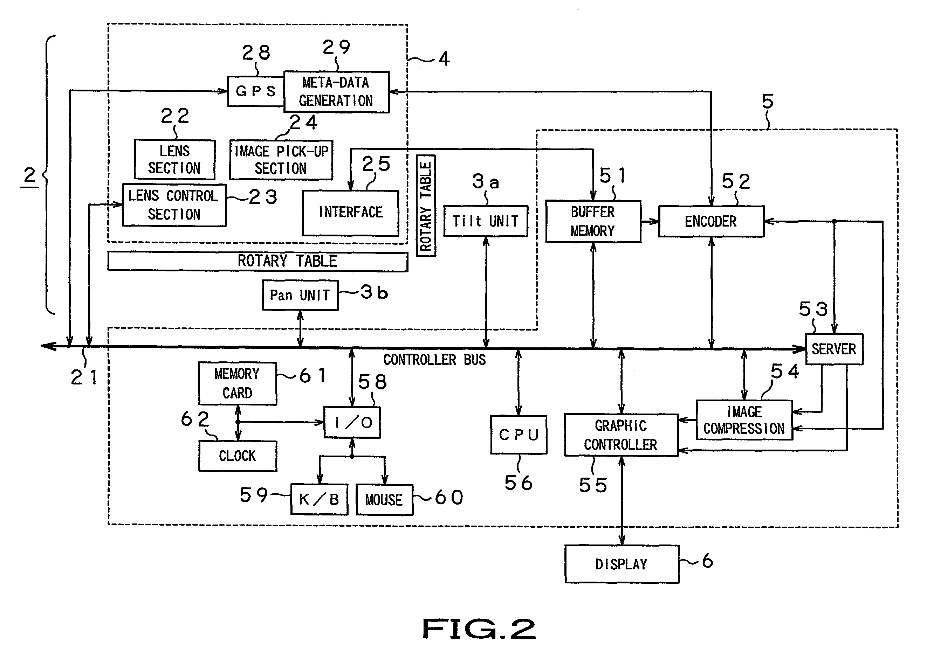

FIG. 2 is a block diagram showing the configuration of the camera unit 2 and the monitoring unit 5. In FIG. 2, respective components of the camera unit 2 and the monitoring unit 5 are connected to a common controller bus 21.

The pan/tilter unit 3 constituting the camera unit 2 includes a Tilt section 3a and Pan section 3b which control the rotary table for changing photographic direction. Moreover, the camera section 4 which constitutes the camera unit 2 comprises a lens control section 23 for mainly changing picture angle of the lens section 22, an image pick-up section 24 disposed at the position perpendicular to the optical axis of the lens section 22, an IEEE (Institute of Electrical and Electronics Engineers) 1394 interface 25 for transmitting image signal generated by the image pick-up section 24 to the monitoring unit 5, a GPS (Global Positioning System) receiving section 28 for detecting current position of the camera unit 2, and a meta-data generating section 29 fitted (mounted) at the GPS receiving section 28. It is to be noted that the IEEE 1394 interface 25 may be substituted for Ethernet (Registered Trademark).

The monitoring unit 5 comprises a buffer memory 51 connected to the IEEE 1394 interface 25, an encoder 52 connected to the buffer memory 51, a server 53 for storing images outputted from the encoder 52, an image compression section 54 for compressing the image which has been read out from the server 53, a graphic controller 55 connected to the server 53 and the image compression section 54 and serving to prepare image to be displayed on the display 6, a CPU 56 for controlling respective sections through the controller bus 21, a keyboard 59 and a mouse 60 which are respectively connected to an I/O port 58 and serve to allow user to designate desired image area and/or image position from image displayed on the display 6, and a memory card 61 and a clock 62 which are connected to the I/O port 58.

The tilt section 3a and the pan section 3b rotate stepping motor constituted as drive source for rotary table on the basis of a drive signal from the CPU 56. Thus, it is possible to change, in horizontal direction or in vertical direction, photographic direction of the camera section 4 mounted on the rotary table.

The lens control section 23 executes automatic iris control operation and/or automatic focus control operation with respect to the lens section 22 on the basis of drive signal from the CPU 56. The lens control section 23 changes photographic picture angle with respect to object on the basis of such drive signal. Thus, the camera section 4 can also successively adjust photographic magnification (enlargement ratio) to pick up image of object.

The image pick-up section 24 is constituted by solid-state image pick-up device, e.g., CCD (Charge Coupled Device), etc., and serves to form, onto the image pick-up surface, object image incident through the lens section 22 to generate image signal by photoelectric conversion to transmit the image signal to the IEEE 1394 interface 25.

The GPS receiving section 28 detects installation place and/or photographic direction of the camera unit 2 on the basis of signal sent out by the GPS system. By providing the GPS receiving section 28, particularly in the case where plural camera units 2 are installed (provided), it becomes possible to conduct a control in such a manner to interlock both photographic directions with each other. An output signal from the GPS receiving section 28 is delivered to the meta-data generating section 29. Thus, meta-data consisting of position information such as latitude, longitude, azimuth and/or height, etc. and time and various parameters, etc. which are based on position measurement result by GPS are generated. The meta-data generating section 29 delivers, to the encoder 52, the position information and the meta-data which have been generated. It is to be noted that, in the present invention, the configurations of the GPS receiving section 28 and the meta-data generating section 29 may be omitted.

The buffer memory 51 temporarily stores image signal delivered from the IEEE 1394 interface 25 on the basis of a control signal from the CPU 56. The image signal which has been temporarily stored in the buffer memory 51 is delivered to the encoder 52, and is compression-encoded on the basis of the standard, e.g., JPEG (Joint Photographic Experts Group), etc. The encoder 52 may add position information and/or meta-data which are delivered from the meta-data generating unit 29 with respect to image signal to be compression-encoded. The encoder 52 outputs the compression-encoded image signal to the server 53 or the image compression section 54. It should be noted that in the case where compression-encoding is not performed with respect to image signal to be delivered, processing at the encoder 52 is omitted.

The server 53 successively records image signals outputted from the encoder 52 in a manner associated with position information or meta-data. The server 53 may be substituted for, e.g., hard disc or detachable disc-shaped recording medium. The image signal recorded at the server 53 is read out to the image compression section 54 or the graphic controller 55 on the basis of control by the CPU 56. In this instance, control is made so as to record image signal recorded at the server 53 into memory card 61 so that user can also transfer such picked up image into other PC. In addition, control is made so as to record image signal recorded at the server 53 into the network server 11 to thereby substitute the server 53 for the network server 11.

The image compression section 54 respectively generates compressed image and Thumbnail image with respect to image signal in the JPEG form which has been read out from the server 53. The graphic controller 55 executes picture processing with respect to the display 6 on the basis of image signal which has been read out from the server 53, or image signal which is outputted from the image compression section 54. In addition, the graphic controller 55 executes controls of contrast and luminance at the display 6 on the basis of control by the CPU 56.

In the case where image area and image position are designated through the keyboard 59 or the mouse 60 by user, the CPU 56 transmits, through the controller bus 21, drive signals for driving pan/tilter section 3 and the lens control section 23, and controls signals for controlling respective components within the monitoring unit 5. The CPU 56 conducts a control so as to receive a predetermined request signal from the terminal unit 9 to select optimum one from images recorded in the server 53, or to select various information to transmit them to corresponding terminal units 9.

Then, the image pick-up operation at the monitoring system 1 to which the present invention has been applied will be explained.

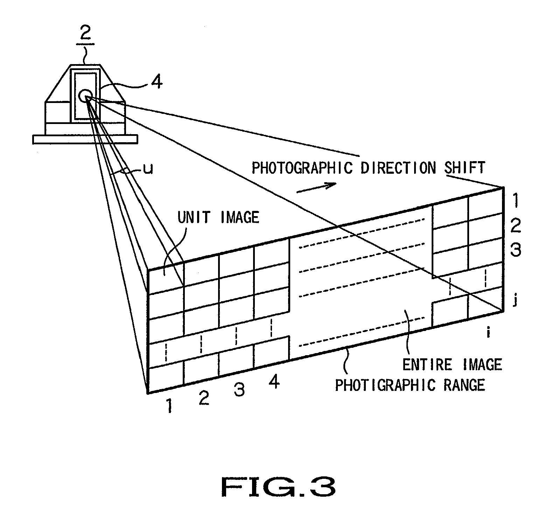

FIG. 3 shows the case where image of the inside of the photographic range indicated by black frame is picked up at photographic picture angle u by the camera unit 2. In order to entirely pick up image of photographic range at photographic picture angle u, it is necessary to pick up image of photographic direction while successively shifting it in horizontal direction or in vertical direction. Assuming that size of the photographic range is represented by value which is $i \times j$ times greater than size of frame obtained by performing image pick-up operation at an arbitrary photographic picture angle u (hereinafter referred to as unit image), it is necessary to set at least $i \times j$ kinds of photographic dimensions. By pasting $i \times j$ number of unit images which have been imaged at the photographic picture angle u, it is possible to synthesize the entire image which represents the entirety of the photographic range.

Here, when coordinates (M, N) of respective unit images of the photographic range are assumed to be 1, 2, .., M., 1 in succession from the left end in FIG. 3 with respect to the horizontal direction, and those coordinates (M, N) are assumed to be 1, 2, ·· N·, j in succession from the upper end with respect to the vertical direction, the CPU 56 transmits a drive signal to the tilt section 3a and the pan section 3b to thereby allow the photographic direction of the camera section 4 to first become in correspondence with the coordinates (1,1) positioned in the left and upper directions to execute image pick-up operation. An image signal based on unit image generated as the result of the fact that image pick-up operation is performed with respect to the coordinates (1,1) is temporarily stored into the buffer memory 51, and is compression-encoded on the basis of the JPEG standard at the encoder 52. Further, position information and/or meta-data are added to the image signal at the same time. The image signal thus obtained is recorded at the server 53.

Similarly, the CPU 56 drives a drive signal to the tilt section 3a and the pan section 3b to thereby shift the photographic direction of the camera section 4 by one picture frame toward the right side to execute image pick-up operation in a manner to be in correspondence with the coordinates (2, 1). An image signal generated as the result of the fact that image pick-up operation is performed with respect to the coordinate (2,1) is similarly recorded at the server 53. The camera section 4 successively changes the photographic direction toward coordinates (3, 1), (4,1) ·· (1,1) in the horizontal direction to execute image pick-up operation.

The camera section 4 completes image pick-up operation of the first column thereafter to adjust, on the basis of control by the CPU 56, the photographic direction so that there results the coordinate (1, 2) of the second column to execute image pick-up operation thereafter to execute image pick-up operation while successively changing the photographic direction in the horizontal direction. When such operation is repeated so that image pick-up operation is completed until coordinate (i, j), the server 53 is placed in the state where image signals based on i $\times$ j number of unit images which have been picked up every pixels are recorded.

Image signals based on respective unit images recorded at the server 53 are respectively read out by the image compression section 54 and are compressed so as to become in conformity with size of display picture of the display 6. The compressed respective unit images are displayed on the display 6 via the graphic controller 15. By displaying, on the display 6, all of i $\times$ j number of unit images recorded at the server 53, one entire image is synthesized. By executing the above-described image pick-up operation at a predetermined interval, it becomes possible to acquire the entire image showing the latest state of the photographic range.

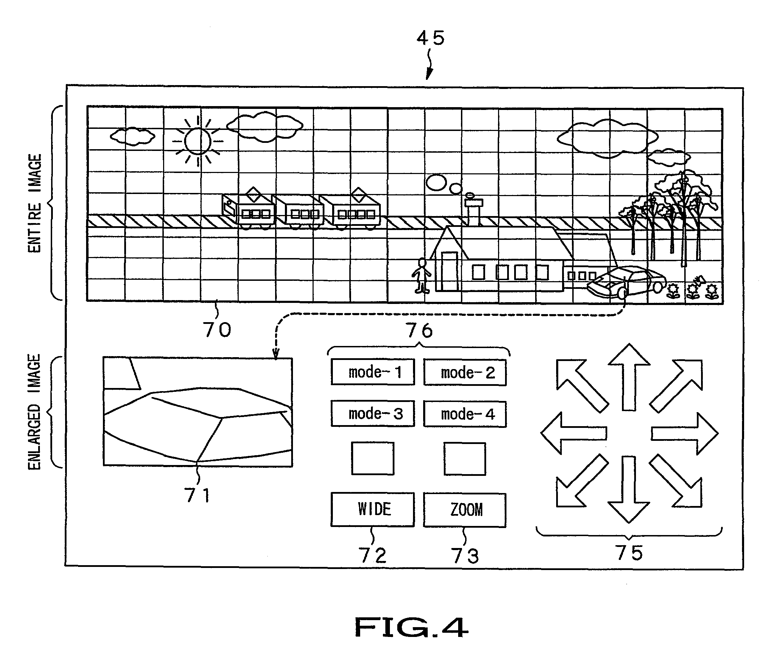

FIG. 4 shows an example in which the entire image synthesized by pasting picked-up i $\times$ j number of unit images is displayed on an entire image display portion 70 of the display 6. The monitoring unit 5 may allow the entire image display portion 70 to display boundary between respective unit images constituting the entire image, or may allow the entire image display portion 70 to display only seamless entire image. In addition, the monitoring apparatus 5 may allow the entire image display portion 70 to display, as substitute of panoramic entire image, one entire image obtained by performing image pick-up operation at a photographic picture angle which can grasp the entirety of the photographic range.

At display picture 45, there is further provided an enlarged image display portion 71 for displaying enlarged image obtained by enlarging unit image. One unit image designated by user among unit images constituting the entire image displayed on the entire image display portion 70 may be displayed in an enlarged manner on the enlarged image display portion 71, or moving pictures may be successively displayed thereon with respect to photographic direction of such one unit image. Thus, user can also confirm, on the real time basis, circumstances (state) in the photographic direction at designated unit image.

On the display picture 45, there are displayed a WIDE button 72 for displaying unit image displayed at the enlarged image display portion 71 in the state where photographic magnification (enlargement ratio) is contracted, and a ZOOM button 73 for displaying such unit image in the state where the photographic magnification (enlargement ratio) is enlarged. On the display picture 45, there are also displayed a photographic direction control portion 75 for adjusting photographic direction of the camera section 4 in horizontal/vertical directions, and a setting button 76 for performing setting of various modes and/or allowing server to record image signal based on unit image at a desired address, etc.

User can designate desired image area and/or image position by using keyboard 59 or mouse 60 with respect to the entire image display portion 70 or the enlarged image display portion 71. It should be noted that light of sight and/or pointer for executing the above-described designation operation in a manner interlocking with movement of mouse 60, etc. may be further displayed on respective display portions 70, 71.

Then, a method of detecting difference taking place on picked up image by the monitoring system 1 to which the present invention has been applied will be explained.

By image pick-up operations executed at predetermined intervals as described above, entire images obtained by picking up imgeas of latest states (circumstances) are successively recorded at the server 53. Here, the entire image showing the latest state of the photographic range among entire images recorded at the server 53 is referred to as comparative entire image, and the entire image which is picked up and recorded immediately before the comparative entire image is referred to as the fundamental entire image.

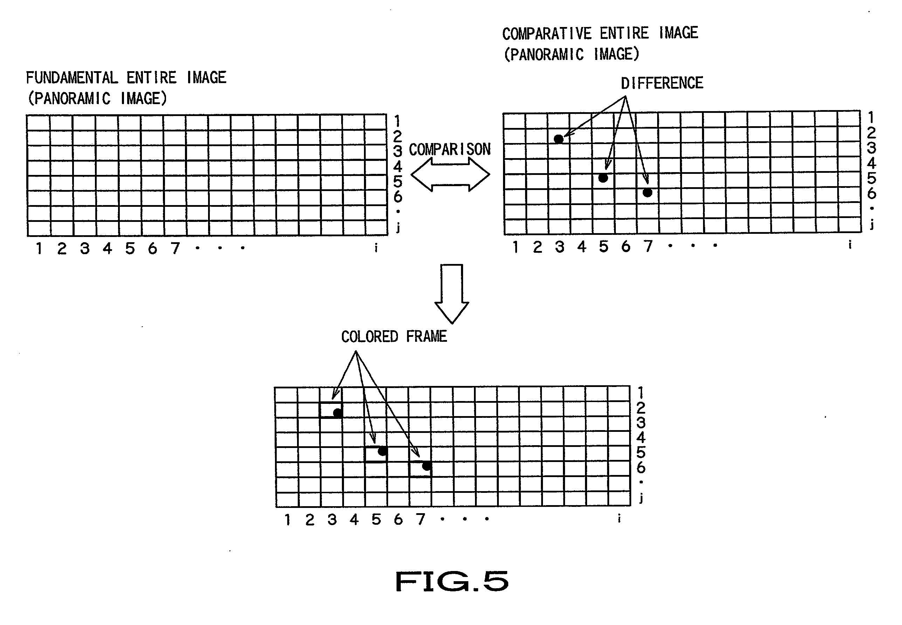

As shown in FIG. 5, the monitoring system 1 compares luminance levels for each original color component of R, G, B between respective unit images constituting comparative entire image and respective unit images constituting the fundamental entire image. The comparison between luminance levels is executed between unit images existing at the same coordinates (M, N), i.e., between unit images existing in the same photographic direction. Thus, changes of luminance levels at respective original components of the comparative entire image with respect to the fundamental entire image can be detected every photographic direction.

In the case where difference is detected at, e.g., coordinates (3, 2), (5, 5), (7, 6) as the result of the fact that luminance levels are compared every unit image, frames in which only such unit image is colored are displayed to thereby draw attention to user. At this time, two unit images to be compared may be displayed on the display picture 45 simultaneously with display of colored frame to thereby immediately notify cause of such difference.

Thus, user can examine the detail of difference by drawing attention only to unit images displayed by colored frame on the display picture 45. For this reason, it is possible to lessen burden of labor.

It is to be noted that, in the present invention, luminance levels may be compared as described above with respect to only to a partial unit image constituting the comparative entire image. At this time, user designates a desired unit image by using mouse 60, etc. to thereby have ability to discriminate presence/absence of difference of luminance level with respect to only such designated unit image. Thus, it becomes possible to perform high accuracy and high sensitivity difference detection of image.

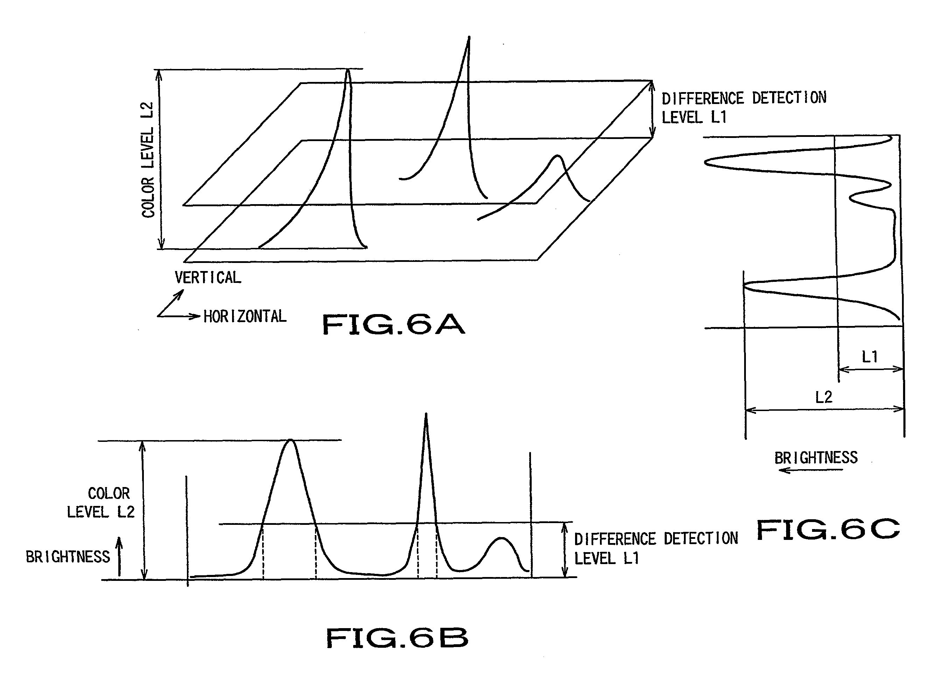

FIG. 6A is a view for explaining the state for comparing luminance level of R (red) among original color components. The ordinate indicates difference value (brightness) computed every corresponding pixels with respect to unit images to be compared. FIG. 6B shows the maximum value in the horizontal direction among difference values shown in FIG. 6A, and FIG. 6C shows the maximum value in the vertical direction among difference values shown in FIG. 6A.

The difference detection level L1 and the color level L2 are levels which can be both freely set by user by using keyboard 59 or mouse 60. When difference value of computed luminance level of original component (R) exceeds the difference detection level L1, it is judged that difference has been detected. The color level L2 is level for setting gain of difference value to be computed for the purpose of improving S/N ratio. For example, as shown in FIG. 6, one difference value is amplified up to color level L2, whereby other difference values are similarly amplified. By setting a desired difference detection level L1 with respect to amplified respective difference values, it becomes possible to realize high accuracy difference detection. Namely, user can freely set color level L2 in correspondence with level of difference value for which detection is desired. In addition, by setting difference detection level L1 in the relationship with respect to the color level L2, it is possible to freely set the degree of level change caused to take place with respect to ratio of color level L2 when it can be judged that difference is detected. Also in regard to other original color components (G, B), it is possible to similarly set L1 and L2.

The difference detection level L1 and the color level L2 may be set to levels different from each other for each original color component of R, G, B, and may be set to levels different from each other every unit images constituting the comparative entire image.

Namely, in the monitoring system 1, in the case where corresponding difference value level exceeds difference detection level L1 at least at one original color component among difference values of luminance levels computed for each original color component with respect to unit images to be compared, it can be judged that any difference has been detected with respect to the unit image. For this reason, it is possible to singly detect difference every R, G, B. Thus, it is possible to detect, at high accuracy, as far as very small state change which cannot be visually detected at actually displayed entire image on the display picture 45.

In the monitoring system 1 to which the present invention has been applied, it is also possible to select size of object in which difference can be detected.

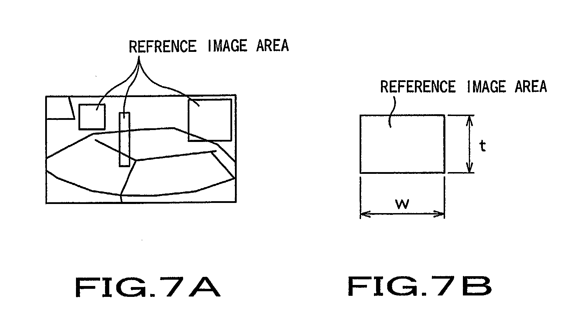

As shown in FIG. 7A, user can set desired reference image area every respective unit images by using keyboard 59 or mouse 60. The reference image area to be set may be set to one kind of reference image area or plural kinds thereof with respect to one unit image. In addition, reference image area consisting of sizes different from each other for each original color component may be set.

Here, in the case where reference image area in which length in horizontal direction is W and length in vertical direction is t is set by user as shown in FIG. 7B, the CPU 56 discriminates detected area where determined difference value is above difference detection level L1 with respect to such unit image in which the reference image area has been set. The CPU 56 compares sizes between the discriminated detected area and the reference image area.

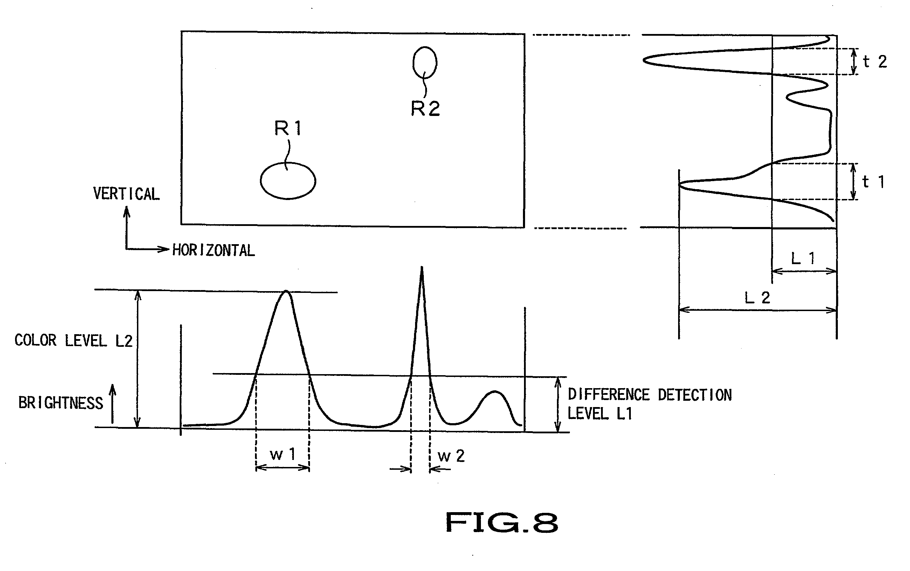

For example, as shown in FIG. 8, in the case where detected area R1 in which length in horizontal direction is W1 and length in vertical direction is t1 is first discriminated as detected area in which difference value is above difference detection level L1, length W of the reference image area and W1 are compared with each other with respect to horizontal direction, and length t of the reference image area and the t1 are compared with each other with respect to the vertical direction. As a result, in the case where sizes in horizontal and vertical directions of the detected area R1 are both beyond sizes of the reference image area, it is judged that difference has been detected. In the case where either one of sizes in horizontal and vertical directions is below size of the reference image area with respect to the detected area R1, it is judged that difference has not been detected.

Similarly, in the case where the CPU 56 discriminates, as detected area where difference value is above the difference detection level L1, a detected area R2 in which length in the horizontal direction is W2 and length in the vertical direction is t2, the CPU 56 compares length W of the reference image area and the W2 with respect to the horizontal direction. Moreover, the CPU 56 compares length t of the reference image area and the t2 with respect to the vertical direction. Thus, the CPU 56 judges presence/absence of difference.

In the monitoring system 1 to which the present invention has been applied, it is possible to select detected area for detecting difference on the basis of the reference image area which has been set by user. Particularly, size of the reference image area is finely adjusted so that there is no possibility that difference may be detected with respect to very small detected area. As a result, there is no possibility that colored frame may be displayed in a manner as described above with respect to such unit image including detected area. For this reason, it is possible to prevent excessive attention to user.

Moreover, also in the case where detection of difference is desired with respect to a specific object from objects existing within photographic range, size of the reference image area is set in accordance with the size to be detected so that such desire can be realized. Particularly, since there are many cases where the entire image obtained by picking up image of object while successively changing the photographic direction includes various photographic objects, reference image area consisting of sizes different from each other between unit images is set, thereby making it possible to realize difference detection by the single system with respect to respective graphic objects.

Even if photographic object existing at far distance from the camera section 4 and photographic object existing at near distance therefrom are the same material, sizes displayed at unit images are different. For example, even if automatic vehicle on road provided at far distance position from the camera section 4 and automatic vehicle on road provided at near distance position from the camera section 4 are automatic vehicles of the same kind, the latter automatic vehicle is displayed on larger scale. For this reason, sizes of reference image area to be set are changed between unit image including road provided at far distance position from the camera section 4 and unit image including road provided at near distance position from the camera section 4, thereby making it possible to realize precise difference detection irrespective of far or near distance from the camera section 4 also with respect to automatic vehicles of the same kind.

It is to be noted that the present invention is not limited to the above-described embodiments, but in the case where size of detected area is above size of the reference image area in either one of horizontal direction and vertical direction, it may be judged that difference has been detected.

In the monitoring system 1 to which the present invention is applied, there may be also performed positional adjustment for adjusting positional shift of unit image in which luminance level is compared.

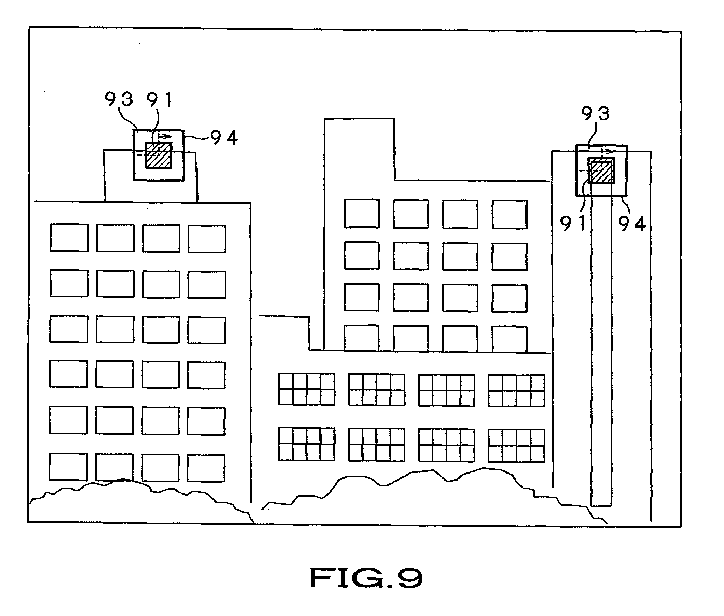

The CPU 56 extracts reference block 91 consisting of a predetermined number of pixels (e.g., $16 \times 16$ pixels) from unit image (prior unit image) constituting the fundamental entire image. The reference block 91 is set in a manner to include the so-called high frequency area such as edge component, etc. as shown in FIG. 9, for example.

Then, the CPU 56 sets search range 94 at unit image (posterior unit image) constituting the comparative entire image. The search range 94 is set as area consisting of, e.g., $24 \times 24$ pixels which are respectively extended by $\pm 4$ pixels in horizontal and vertical directions with the reference block 91 being as center. Then, the CPU 56 further sets search block 93 within the search range 94 at the posterior unit image. Setting is made such that the numbers of pixels in horizontal and vertical directions at the search block 93 are respectively equal to the numbers of pixels in horizontal and vertical directions of the above-described reference block 91.

Then, the CPU 56 serves to successively move the search block 93 in horizontal and vertical directions within the search range 94. The CPU 56 may serve to move the search block 93 every each pixel, or may serve to move it every several pixels. The CPU 56 determines similarity between the search block 93 which is successively moved and the reference block 91. Further, the CPU 56 detects position of the search block 93 which indicates the highest similarity.

In the case where the similarity is determined, the CPU 56 first calculates difference value RD between luminance level white/black image signal of the search block 93 and luminance level of white/black image signal of the reference block 91. The white/black image signal can be calculated on the basis of the following formula (1) from original color components of R, G, B.

$$\text{White/Black image signal}$$

$$= (R \times 0.30 + G \times 0.59 + B \times 0.11) \quad \cdots (1)$$

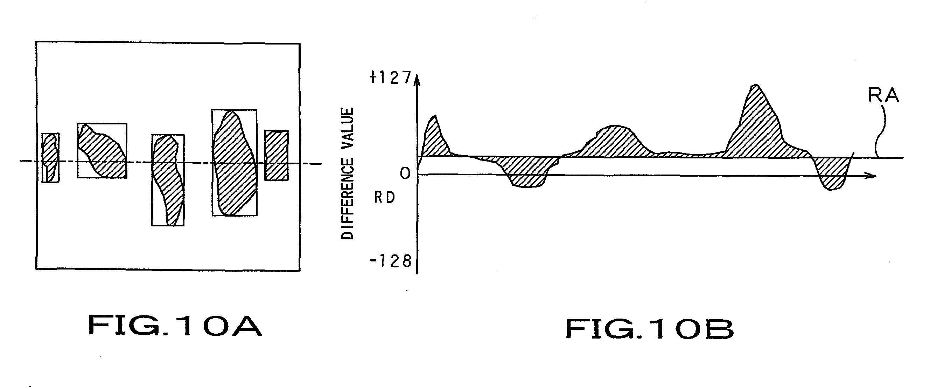

FIG. 10A shows the area where luminance level difference of white/black image signal takes place within the search block 93. The area indicated by slanting lines in FIG. 10A is the area where difference take place with respect to luminance level of white/black image signal between the reference block 91 and the search block 93 as the result of the fact that positional shift has taken place at the posterior unit image.

Moreover, the abscissa of FIG. 10B corresponds to pixels in the horizontal direction positioned on dotted lines in FIG. 10A, and the abscissa indicates the example where difference values RD determined with respect to pixels positioned on such dotted lines are represented by 8 bit data.

Here, the CPU 56 determines average difference value RA which is average of difference values represented by the ordinate. Further, the CPU 56 determines variance integral value F by using the following formula (2) with respect to respective pixels positioned on dotted lines with the determined average difference value RA being as reference.

$$\text{Variance integral value F}$$
$$= \int (\text{difference value } RD - \text{average difference value } RA) \quad \cdots (2)$$

The variance integral value F determined by the formula (2) is represented by slanting line area in FIG. 10B.

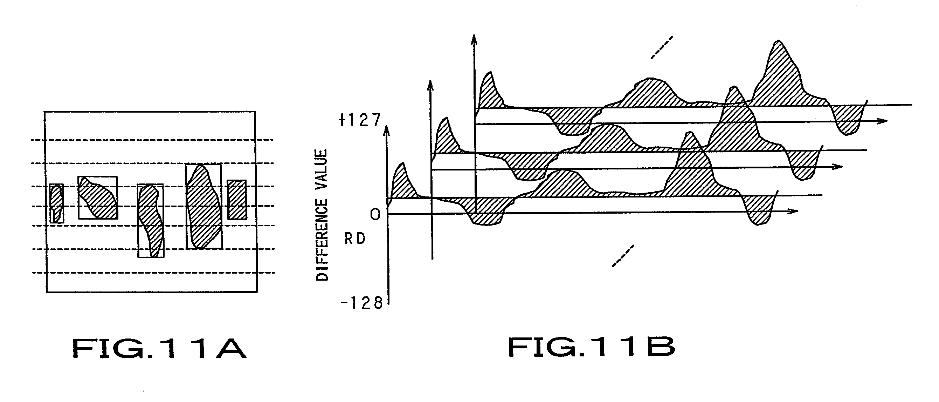

The CPU 56 can determine such variance integral value F while successively shifting dotted lines in the vertical direction as shown in FIG. 11A. As a result, as indicated by the slanting line area in FIG. 11B, variance integral value F determined every vertical components can be obtained. The CPU 56 determines variance integral value F' finally indicated by the following formula (3) by making use of the variance integral value F.

$$\text{Variance integral value F'}$$
$$= \iint (\text{difference value } RD - \text{average difference value } RA) \quad \cdots (3)$$

In this way, the CPU 56 successively determines variance integral values F' on the basis of the above-described formula between search block 93 which is successively moved within the search range 94 and the reference block 91 to allow the position of the search block 93 indicating the minimum variance integral value F' to be position indicating the highest similarity. The CPU 56 performs positioning of posterior unit image on the basis of relative position with respect to the reference block 91 which has been determined with respect to such search block 93.

The monitoring system 1 to which the present invention is applied can execute positioning in a manner as described above with respect to all unit images constituting the entire image. Thus, there is no possibility that difference detection is caused to take place on the basis of merely positional shift of unit image. Particularly, in the case of unit image which is picked up while successively changing photographic direction with respect to broad photographic range, there are many instances where positional shift may take place on pixel basis. In addition, there are instances where shift may delicately take place in the photographic direction controlled by the pan/tilter section 3 in dependency upon the camera section 4 which performs image pick-up operation. Also in such case, respective unit images are caused to undergo positioning so that they are at optimum positions, thereby making it possible to further improve accuracy of difference detection.

While explanation has been given in the above-described positioning in connection with the case where one reference block 91 and one search block 93 are respectively set, plural blocks may be set with respect to respective blocks as shown in FIG. 9. Thus, even in the case where difference takes place within the area of set reference block 91, it is possible to precisely perform positioning at other reference block.

In the positioning, position of search block 93 indicating the highest similarity may be determined on the basis of the ordinary block matching method.

Finally, an example of operation procedure at the monitoring system 1 to which the present invention has been applied will be explained.

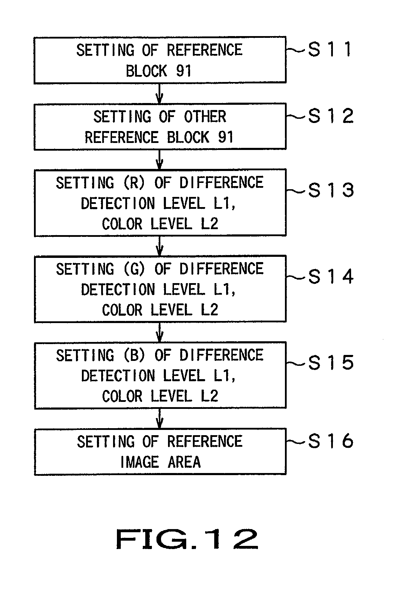

FIG. 12 shows a flowchart for allowing user to perform various settings with respect to unit images displayed at the entire image display portion 70.

First, at step S11, setting of reference block 91 is performed. With respect to setting of the reference block 91, user may perform such setting by using mouse 60, etc. with respect to a desired area, or the CPU 56 may preferentially extract the edge portion by itself to thereby perform such setting.

Then, processing shifts to step S12. In the case where plural reference blocks 91 are provided, processing similar to the step S11 is executed.

Then, processing shifts to step S13. Thus, user performs setting of color level L2 with respect to original color component (R), and further performs setting of difference detection level L1 in accordance with the set color level L2. Settings of L1, L2 may be executed every respective unit images, or may be uniformly set at the entire image.

Then, processing shifts to step S14. Thus, user performs setting of color level L2 with respect to original color component (G), and further performs setting of difference detection level L1 in accordance with the set color level L2. Also at step S15, settings of L1, L2 are similarly performed with respect to original color component (B).

Then, processing shifts to step S15 to execute setting of the above-described reference image area every respective unit images. By completing setting processing up to the step S15, difference detection can be performed with respect to respective unit images consisting the entire image.

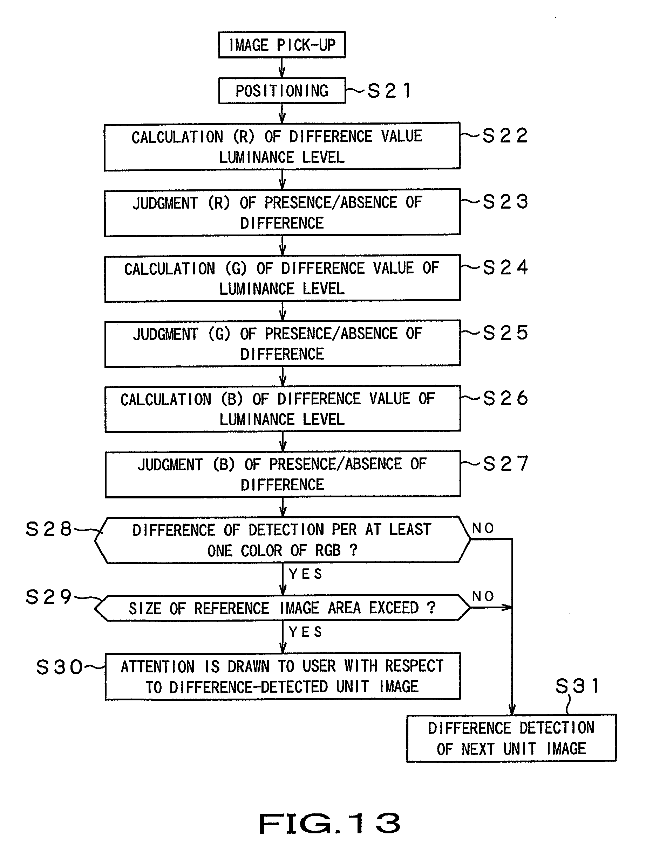

FIG. 13 shows a flowchart for difference detection with respect to such respective unit images.

When image pick-up operation is executed, unit images based on picked up image signals are successively recorded at the server 53 in a manner as described above. The CPU 56 executes positioning between posterior unit image and prior unit image constituting the fundamental entire image with respect to the posterior unit image constituting relative entire image newly recorded at the server 53 (step S21).

Then, processing shifts to step S22 to calculate difference value of luminance level every respective unit images with respect to original color component (R). Then, processing shifts to step S23 to judge whether or not difference value of such luminance level is above difference detection level L1.

Similarly, at steps S24, S25, difference values of luminance levels are calculated every respective unit images with respect to original color component (G), and to judge whether or not corresponding difference value is above the difference detection level L1. Also at steps S26 and S27, judgment is similarly performed with respect to original color component (B).

Then, processing shifts to step S28 to judge whether or not difference has been detected with respect to at least one color of R, G, B which are original color components. As a result, in the case where difference has been detected with respect to at least one color, processing shifts to step S29. On the other hand, in the case where any difference is not detected at respective original color components, processing shifts to step S31 to shift difference detection of next unit image particularly without paying attention to user with respect to unit image to be compared.

At the step S29, sizes of detected area and reference image area are compared with each other. As a result, in the case where those sizes are above sizes of the reference image area both in horizontal and vertical directions of the detected area as described above, processing shifts to step S30. In the case where either one of sizes in horizontal and vertical directions is below size of the reference image area, processing shifts to the step S31. At the step S30, colored frame is displayed with respect to unit image to be compared to thereby draw attention to user. Thereafter, processing shifts to the step S31.

The operations from the step S21 up to the step S31 are executed with respect to all unit images constituting the entire image thereafter to enter the next image pick-up operation. Comparative entire images in the above-described processing are continuously recorded at the server 53 as they are. In the case where unit image based on the next image pick-up operation is newly recorded at the server, that unit image is referred at the time of difference detection as fundamental unit image. The comparative entire image and the fundamental entire image are sequentially updated as the result of the fact that new image pick-up operation is executed.

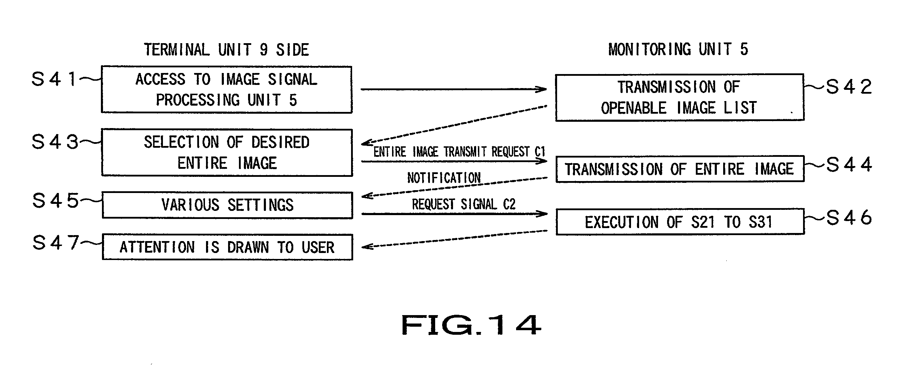

It is to be noted that, in the monitoring system 1 to which the present invention is applied, detected information relating to difference can be further offered to users who operate terminal units 9 by the procedure shown in FIG. 14.

First, at step S41, respective users who operate terminal units 9 provide access to the monitoring unit 5 connected to the monitor 8.

Then, processing shifts to step S42. Thus, the monitoring unit 5 prepares openable image list with respect to images which can be opened to users among entire images recorded at the server 53 itself to transmit it to the terminal units 9. In this respect, there are also instances where not only file name and/or file sizes of respective entire images but also contracted (reduced) entire images are pasted at the openable image list. The openable image list is displayed on the terminal displays 10 through the network 8 and the terminal units 9.

Then, processing shifts to step S43. Thus, user selects a desired entire image from the openable image list. The terminal unit 9 transmits entire image transmit request C1 to the monitoring unit 5 in accordance with selecting operation by user.

At step S44, the monitoring unit 5 receives such entire image transmit request C1 to read out, from the server, the entire image selected by user to transmit the selected entire image to the terminal unit 9. The transmitted entire image is displayed on the terminal display 10 through the netwok 8 and the terminal units 9.

Then, processing shifts to step S45. Thus, user designates point by using mouse 60, etc. with respect to the entire image displayed on the terminal display 10, or with respect to respective unit images or desired unit image to perform various settings shown in the steps S11 to S16. The terminal unit 9 transmits a predetermined request signal C2 in accordance with such designation operation of user.

Then, processing shifts to step S46. Thus, the monitoring unit 5 receives such request signal C2 to execute the operations indicated at the steps S21 to S31. Further, the monitoring unit 5 notifies, to the terminal unit 9, coordinates of unit image necessary for drawing attention to user at step S30. As a result, at step S47, colored frame is displayed with respect to unit images in which such difference has been detected on the terminal display 10 connected to the terminal unit 9.

By executing the above-explained procedure, the monitoring system 1 to which the present invention is applied can offer suitable detection information also to users who operate terminal units 9 connected to the network 8 in addition to the user who operates the monitoring unit 5.

While explanation has been given in the example shown in FIG. 14 in connection with the case where the monitoring unit 5 executes the operation shown in the step S46, the present invention is not limited to such case. For example, picked up unit images may be successively recorded at the network server 11 connected to the network 8, whereby the terminal unit 5 itself provides access to such network server 11 to read out unit image to execute the operation corresponding to the step S46. Thus, burden can be lessened with respect to the monitoring unit 5 which has been accessed from plural terminal units 9.

In this monitoring system 1, the entire image based on image signals which have been imaged in the past are accumulated at the server 53, thereby making it possible to analyze, in a manner of ex post fact, differences which have taken place in the past. In such case, in analyzing detailed circumstances or cause, the CPU 56 compares luminance levels between unit images to have ability to pay attention with respect to unit images in which any difference has taken place. For this reason, it is possible to eliminate the burden of labor of user.

It is to be noted that while the invention has been described in accordance with preferred embodiments thereof illustrated in the accompanying drawings and described in the above description in detail, it should be understood by those ordinarily skilled in the art that the invention is not limited to embodiments, but various modifications, alternative constructions or equivalents can be implemented without departing from the scope and spirit of the present invention as set forth by appended claims.

Industrial Applicability

As described above, panoramic images obtained by picking up images of photographic range while successively changing photographic direction are successively recorded onto recording medium every respective unit images to compare luminance levels for each original color component between one unit image selected from the recording medium and unit image on the same photographic direction which is recorded prior to the selected unit image to display a predetermined information every unit images constituting the panoramic image on the basis of the comparison result. Accordingly, user is not required to always pay attention to change of fine image and/or appearance of very small object, etc. Thus, burden of labor can be lessened. Time required for detection of such difference can be shortened. Further, there is no necessity of depending upon eye of user. Thus, accuracy of difference detection can be improved.

**Claims**

1. A monitoring apparatus adapted for monitoring panoramic image obtained by picking up image of photographic range while successively changing photographic direction,
   the monitoring apparatus comprising:

   recording means for successively, onto a recording medium, respective unit images constituting the panoramic image;
   comparison means for comparing luminance levels for each original color component between one unit image selected from the recording medium and unit image on the same photographic direction which is recorded prior to the unit image; and
   display means for displaying a predetermined information every the unit information constituting the panoramic image on the basis of the comparison result by the comparing means.

2. The monitoring apparatus as set forth in claim 1,
   which further comprises setting means for setting a desired threshold value for each original color component,
   wherein the comparison means determines difference value of luminance level for each original color component, and
   wherein the display means displays the predetermined information when difference value determined by the comparison means is above threshold value which has been set for each original color component.

3. The monitoring apparatus as set forth in claim 2,
   wherein the setting means is adapted so that a desired threshold value is set every the unit image.

4. The monitoring apparatus as set forth in claim 2,
   wherein the comparison means determines difference value of luminance level with respect to respective pixels constituting the unit image.

5. The monitoring apparatus as set forth in claim 4,

wherein the setting means is adapted so that reference image area is further set every the unit image, and wherein the display means successively extracts image areas consisting of pixels in which difference value determined by the comparison means is above the threshold value to display the predetermined information when respective maximum lengths in longitudinal and lateral directions of the extracted image area respectively exceed sizes in longitudinal and lateral directions within the set reference image area.

6. The monitoring apparatus as set forth in claim 1,
wherein the comparison means compares luminance levels of white/black image signals between one unit pixel which has been read out from the recording medium and unit image on the same photographic direction which is recorded prior to the unit image to move position of the one unit image which has been read out in accordance with the comparison result to compare luminance levels for each original color component.

7. The monitoring apparatus as set forth in claim 6,
wherein the comparison means extracts at least one reference block constituting unit image which has been read out from the recording medium, and extracts search block while successively moving it from unit image on the photographic direction which is recorded prior to the unit image to successively calculate variance integral values at luminance levels of the white/block image signal between the reference block and the search block which have been extracted, and
wherein the display means displays the predetermined information on the basis of variance integral value calculated by the comparison means.

8. The monitoring apparatus as set forth in claim 1,
which further comprises communication control means for notifying unit image in which the predetermined information should be displayed to other electronic equipment through a connected communication network on the basis of comparison result by the comparison means.

9. A monitoring method of monitoring panoramic image obtained by picking up image of photographic range while successively changing photographic direction,
the monitoring method comprising:
successively recording, onto a recording medium, respective unit images constituting the panoramic image;
comparing luminance levels for each original color component between one unit image selected from the recording medium and unit image on the same photographic direction which is recorded prior to the unit image; and
displaying a predetermined information every the unit images constituting the panoramic image on the basis of the comparison result.

10. The monitoring method as set forth in claim 9,
wherein a desired threshold value is set for each original color component to determine difference value of luminance level for each original color component, whereby when the determined difference value is above a threshold value which is set for each original color component, the predetermined information is displayed.

11. The monitoring method as set forth in claim 10,
wherein the desired threshold value is further set every the unit image.

12. The monitoring method as set forth in claim 10,
wherein difference values of luminance level are determined with respect to respective pixels constituting the unit image.

13. The monitoring method as set forth in claim 12,
wherein reference image area is further set every the unit image to successively extract image areas consisting of pixels in which the determined difference value is above the threshold value, whereby when respective maximum lengths in longitudinal and lateral directions of the extracted image area are respectively above sizes in longitudinal and lateral directions within the set reference image area, the predetermined information is displayed.

14. The monitoring method as set forth in claim 9,
wherein luminance levels of white/black image signal are compared with each other between one unit image which has been read out from the recording medium and unit image on the same photographic direction which is recorded prior to the unit image to move position of the one unit image which has been read out in accordance with he comparison result to compare luminance levels for each original color component.

**15.** The monitoring method as set forth in claim 14,
wherein at least one reference block constituting unit image which has been read out from the recording medium, and search block is extracted from unit image on the same photographic direction which is recorded prior to the unit image while successively moving the search block to successively calculate variance integral values at luminance levels of the white/black image signal between the reference block and the search block which have been extracted to display the predetermined information on the basis of the calculated variance integral value.

**16.** The monitoring method as set forth in claim 9,
wherein unit image in which the predetermined information is should be displayed is notified to other electronic equipment through a connected communication network on the basis of the comparison result.

**17.** An image pick-up apparatus comprising:
image pick-up means for picking up image of photographic range while successively changing photographic direction to thereby generate an image signal for panoramic image;
recording means for successively recording, onto a recording medium, respective unit images constituting the panoramic image on the basis of the generated image signal;
comparison means for comparing luminance levels for each original color component between one unit image selected from the recording medium and unit image on the same photographic direction which is recorded prior to the unit image; and
display means for displaying a predetermined information every the unit images constituting the panoramic image on the basis of the comparison result by the comparison means.

**18.** The image pick-up apparatus as set forth in claim 17,
which further comprises setting means for setting a desired threshold value for each original color component,
wherein the comparison means determines difference values of luminance levels for each original color component, and
wherein the display means displays the predetermined information when difference value determined by the comparison means is above a threshold value which is set for each original color component thereof.

**19.** The image pick-up apparatus as set forth in claim 18,
wherein the setting means is adapted so that a desired threshold value is further set every the unit image.

**20.** The image pick-up apparatus as set forth in claim 18,
wherein the comparison means determines difference values of luminance levels with respect to respective pixels constituting the unit image.

**21.** The image pick-up apparatus as set forth in claim 20,
wherein the setting means is adapted so that reference image area is further set every the unit image, and
wherein the display means successively extracts image areas consisting of pixels in which difference value determined by the comparison means is above the threshold value, whereby when respective maximum lengths in longitudinal and lateral directions of the extracted image area are respectively above sizes in longitudinal and lateral directions at the set reference image area, the predetermined information is displayed.

**22.** The image pick-up apparatus as set forth in claim 17,
wherein the comparison means compares luminance levels of white/black image signal between one unit image which has been read out from the recording medium and unit image on the same photographic direction which is recorded prior to the unit image to move, in accordance with the comparison result, the one unit image which has been read out to compare luminance levels for each original color component.

**23.** The image pick-up apparatus as set forth in claim 22,
wherein the comparison means extracts at least one reference block constituting unit image which has been read out from the recording medium, and extracts search block from unit image on the same photographic direction which is recorded prior to the unit image while successively moving the search block to successively calculate variance integral values at luminance levels of the white/black image signal between the reference block and the search block which have been extracted, and
wherein the display means displays the predetermined information on the basis of the variance integral values which have been calculated by the comparison means.

**24.** The image pick-up apparatus as set forth in claim 17,
which further comprises communication control means for notifying, to other electronic equipment, unit image in which the predetermined information should be displayed through a connected communication network on the basis of comparison result by the comparison means.

**25.** A program for allowing computer to execute monitoring of panoramic image obtained by picking up images of image pick-up range while successively changing photographic direction,
the program for allowing the computer to execute processing comprising:

successively recording, onto a recording medium, respective unit images constituting the panoramic image;
comparing luminance levels for each original color component between one unit image selected from the recording medium and unit image on the same photographic direction which is recorded prior to the unit image; and
displaying a predetermined information every the unit images constituting the panoramic image on the basis of the comparison result.

**26.** The program as set forth in claim 25,
which allow computer to execute that desired threshold value is set for each original color component to determine difference value of luminance level for each original color component, whereby when the determined difference value is above threshold value which has been set for each original color component thereof, the predetermined information is displayed.

**27.** The program as set forth in claim 26,
which allows computer to execute processing to determine difference value of luminance level every respective pixels constituting the unit image.

**28.** The program as set forth in claim 27,
which allows computer to execute that reference image area is further set every the unit image to successively extract image areas consisting of pixels in which the determined difference value is above the threshold value, whereby when respective maximum length in longitudinal and horizontal directions of the extracted image area are respectively above sizes in horizontal and lateral directions at the set reference image area, the predetermined information is displayed.

**29.** The program as set forth in claim 25,
which allows computer to execute processing to compare luminance levels of white/black image signal between one unit image which has been read out from the recording medium and unit image on the same photographic direction which is recorded prior to the unit image to move, in accordance with the comparison result, position of the one unit image which has been read out to compare luminance levels for each original color component.

**30.** The program as set forth in claim 29,
which allows computer to execute processing to extract at least one reference block constituting unit images which have been read out from the recording medium, and to extract search block from unit image on the same photographic direction which is recorded prior to the unit image while successively moving the search block to successively calculate variance integral values at luminance levels of the white/black image signal between the reference block and the search block which have been extracted to display the predetermined information on the basis of the calculated variance integral value.

**31.** A monitoring system comprising:
an image pick-up unit for picking up image of photographic range while successively changing photographic direction to thereby generate image signal of panoramic image,
a server for respectively recording respective unit images constituting the panoramic image on the basis of the generated image signal;
server control means for comparing luminance levels for each original color component between one unit image selected from the server and unit image on the same photographic direction which is recorded prior to the unit image; and
a terminal unit in which comparison result by the server control means is transmitted through a communication network to display a predetermined information every the unit images constituting the panoramic image on the basis of the comparison result.

**32.** The monitoring system as set forth in claim 31,
wherein plural terminal units are provided as the terminal unit.

FIG.1

**FIG.2**

PHOTOGRAPHIC DIRECTION SHIFT

UNIT IMAGE

ENTIRE IMAGE
PHOTIGRAPHIC RANGE

# FIG.3

FIG.4

FUNDAMENTAL ENTIRE IMAGE
(PANORAMIC IMAGE)

COMPARATIVE ENTIRE IMAGE
(PANORAMIC IMAGE)

DIFFERENCE

COMPARISON

COLORED FRAME

FIG.5

DIFFERENCE DETECTION
LEVEL L1

COLOR LEVEL L2

VERTICAL

HORIZONTAL

# FIG.6A

L1

L2

BRIGHTNESS

# FIG.6C

COLOR
LEVEL L2

BRIGHTNESS

DIFFERENCE DETECTION
LEVEL L1

# FIG.6B

REFRENCE IMAGE AREA

REFERENCE IMAGE AREA

t

w

# FIG.7A

# FIG.7B

VERTICAL

HORIZONTAL

R1

R2

t2

t1

L1

L2

COLOR LEVEL L2

BRIGHTNESS

DIFFERENCE DETECTION
LEVEL L1

w1

w2

FIG.8

EP 1 653 743 A1

FIG.9

FIG.10A

FIG.10B

EP 1 653 743 A1

FIG.11B

FIG.11A

```
┌─────────────────────────┐
│   SETTING OF REFERENCE  │~S11
│        BLOCK 91         │
└─────────────────────────┘
           ↓
┌─────────────────────────┐
│    SETTING OF OTHER     │~S12
│   REFERENCE BLOCK 91    │
└─────────────────────────┘
           ↓
┌─────────────────────────┐
│ SETTING (R) OF DIFFERENCE│
│   DETECTION LEVEL L1,   │~S13
│      COLOR LEVEL L2     │
└─────────────────────────┘
           ↓
┌─────────────────────────┐
│ SETTING (G) OF DIFFERENCE│
│   DETECTION LEVEL L1,   │~S14
│      COLOR LEVEL L2     │
└─────────────────────────┘
           ↓
┌─────────────────────────┐
│ SETTING (B) OF DIFFERENCE│
│   DETECTION LEVEL L1,   │~S15
│      COLOR LEVEL L2     │
└─────────────────────────┘
           ↓
┌─────────────────────────┐
│   SETTING OF REFERENCE  │~S16
│       IMAGE AREA        │
└─────────────────────────┘
```

# FIG.12

IMAGE PICK-UP

POSITIONING ~S21

CALCULATION (R) OF DIFFERENCE VALUE LUMINANCE LEVEL ~S22

JUDGMENT (R) OF PRESENCE/ABSENCE OF DIFFERENCE ~S23

CALCULATION (G) OF DIFFERENCE VALUE OF LUMINANCE LEVEL ~S24

JUDGMENT (G) OF PRESENCE/ABSENCE OF DIFFERENCE ~S25

CALCULATION (B) OF DIFFERENCE VALUE OF LUMINANCE LEVEL ~S26

JUDGMENT (B) OF PRESENCE/ABSENCE OF DIFFERENCE ~S27

S28~ DIFFERENCE OF DETECTION PER AT LEAST ONE COLOR OF RGB ? NO

YES

S29~ SIZE OF REFERENCE IMAGE AREA EXCEED ? NO

YES

S30~ ATTENTION IS DRAWN TO USER WITH RESPECT TO DIFFERENCE-DETECTED UNIT IMAGE

S31

DIFFERENCE DETECTION OF NEXT UNIT IMAGE

FIG.13

EP 1 653 743 A1

TERMINAL UNIT 9 SIDE                                    MONITORING UNIT 5

S41 — | ACCESS TO IMAGE SIGNAL<br>PROCESSING UNIT 5 | ————————————→ | TRANSMISSION OF<br>OPENABLE IMAGE LIST | — S42

S43 — | SELECTION OF DESIRED<br>ENTIRE IMAGE |

ENTIRE IMAGE TRANSMIT REQUEST C1

| TRANSMISSION OF ENTIRE IMAGE | — S44

NOTIFICATION

S45 — | VARIOUS SETTINGS |

REQUEST SIGNAL C2

| EXECUTION OF S21 TO S31 | — S46

S47 — | ATTENTION IS DRAWN TO USER |

# FIG.14

**INTERNATIONAL SEARCH REPORT**

| International application No. |
| --- |
| PCT/JP2004/000177 |

| A. | CLASSIFICATION OF SUBJECT MATTER |
| --- | --- |
| | Int.Cl$^7$ H04N7/18, H04N5/225, H04N5/91, G06T1/00 |

According to International Patent Classification (IPC) or to both national classification and IPC

| B. | FIELDS SEARCHED |
| --- | --- |

Minimum documentation searched (classification system followed by classification symbols)
Int.Cl$^7$ H04N7/18, H04N5/225, H04N5/91, G06T1/00

Documentation searched other than minimum documentation to the extent that such documents are included in the fields searched

| | | |
| --- | --- | --- |
| Jitsuyo Shinan Koho | 1922–1996 | Toroku Jitsuyo Shinan Koho 1994–2004 |
| Kokai Jitsuyo Shinan Koho | 1971–2004 | Jitsuyo Shinan Toroku Koho 1996–2004 |

Electronic data base consulted during the international search (name of data base and, where practicable, search terms used)

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 2002-369182 A (Sanyo Electric Co., Ltd.), 20 December, 2002 (20.12.02), Par. Nos. [0003], [0037] to [0039] | 1-4,8-12, 16-20,24-27, 31,32 |
| A | (Family: none) | 5-7,13-15, 21-23,28-30 |
| Y | JP 09-168145 A (Sony Corp.), 24 June, 1997 (24.06.97), Par. No. [0052] | 1-4,8-12, 16-20,24-27, 31,32 |
| A | (Family: none) | 5-7,13-15, 21-23,28-30 |
| Y | JP 2001-069394 A (Canon Inc.), 16 March, 2001 (16.03.01), Par. No. [0114]; Fig. 17 | 1-4,8-12, 16-20,24-27, 31,32 |
| A | & US 6470151 B1 | 5-7,13-15, 21-23,28-30 |

| ☐ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 April, 2004 (13.04.04) | 11 May, 2004 (11.05.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)